(19) **Europäisches Patentamt**
**European Patent Office**
**Office européen des brevets**

(11) **EP 1 950 948 A1**

(12) **EUROPEAN PATENT APPLICATION**

(43) Date of publication:
**30.07.2008 Bulletin 2008/31**

(51) Int Cl.:
**H04N 1/32** (2006.01)

(21) Application number: **08150455.7**

(22) Date of filing: **21.01.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **24.01.2007 US 657224**

(71) Applicant: **Xerox Corporation**
**Rochester,**
**New York 14644 (US)**

(72) Inventor: **Yoo, Jae-Hwal**
**West Hills 91307 (CA)**

(74) Representative: **Grünecker, Kinkeldey,**
**Stockmair & Schwanhäusser**
**Anwaltssozietät**
**Leopoldstrasse 4**
**80802 München (DE)**

(54) **Method of printing documents**

(57)     A method of printing documents in which in one embodiment the pages are converted to a PDF page image which is rasterized and fractional sample pixel matrices generated. Color space values are established for the pixels of the sample matrices, and Index Color obtained from a lookup table and converted to H, S, B coordinates. If the Saturation of the pixels is above a chosen threshold, the page is printed on a color printer, if not it is printed on a black and white printer. In another embodiment, the PDF page image is displayed on a screen and the screen pixels mapped in color space and an Index Color obtained for each mapped fraction pixel and the Index Color converted to H, S, B coordinates. If the saturation level of the pixels is above a chosen threshold, the page is printed on a color printer; if not it is printed on a black and white printer. In another embodiment, each document is rasterized completely and converted to a PDF page image and color space values established for each pixel, which are converted to H, S, B coordinates. If the Saturation for each pixel is above a chosen threshold, the page image is printed on a color printer; if not it is printed on a black and white printer. The PDF page images may be tagged as color or black and white, as the case may be.

FIG. 1

EP 1 950 948 A1

**Description**

BACKGROUND

The present invention relates to digital printing of documents, and particularly printing in an office or enterprise situation where it is desired to print a document containing a combination of colored and black and white pages. Such printing jobs typically require the user of the printing equipment to sort or separate the colored pages from the black and white in order to economically perform the printing job. Typically, the pages of the document are loaded in a sheet stack into a receptacle or tray provided on the printing equipment which then feeds the individual sheets into the equipment and performs the printing operation. If the majority of the pages of the document are black and white and are fed along with the colored pages into a color printer, the printing of the black and white pages on the color printer results in a wasteful use of the color printer. Conversely, if the document is fed into a black and white printer, the printer is not capable of printing the color pages in color.

Thus, it has been desired to provide the way or means of automatically determining which pages of a document are colored pages and which are black and white and printing the pages separately on the appropriate printer without requiring the user to separate or sort the colored pages from the document.

BRIEF DESCRIPTION

The method of the present disclosure addresses the above described problem and provides a technique or way of automatically identifying those pages which are colored and those pages which are black and white pages within a document or sheet stack of pages which are to be digitally printed. The method includes converting the document pages to PDF page image files; and, in one exemplary embodiment, the PDF page image files are rasterized and reduced pixel sample matrices are generated. Color space coordinates are established for the pixels in the matrices which are then converted to an index color from a lookup table and converted to an H, S, B or Hue, Saturation, Brightness coordinate system. The user may then assign a saturation threshold for the H, S, B coordinates; and, if any of the pixels exceeds the saturation level, the page is identified as a color page and sent to a color printer. If however, the saturation level of all of the pixels is less than the threshold, the page is identified as black and white and sent to a monochromatic or black and white printer. If desired, the PDF page image files may be tagged respectively as black and white or color as the case may be.

In another exemplary embodiment, the method employs converting each page of the document to a PDF page image and rasterizing the image and displaying it on a screen where the screen pixels are mapped in color space and an index color is obtained from a lookup table for each of the pixels as mapped. The index color for each pixel is then converted to the H, S, B coordinate system and the user selects the saturation threshold whereupon each pixel is examined; and, if its saturation value is higher than the threshold the page is determined to be a color page and sent to a color printer. If none of the pixels on the page have a saturation value greater than the selected threshold, the page is determined to be black and white and is sent to a monochromatic or black and white printer. If desired, the PDF page images may be tagged individually as color or black and white as the case may be.

In another exemplary embodiment, the document pages are converted to PDF page image files and rasterized to generate pixel matrices of each page. A set of color space values is then established for each pixel and converted to the Hue, Saturation and Brightness coordinates from which a saturation threshold is selected. A determination is then made as to whether the saturation level of each pixel is above the selected threshold; and, if any of the pixels on the page has a saturation level above the selected threshold, the page is identified as a color page and sent to a color printer for printing. However, if none of the pixels on a page has a saturation level above the selected threshold, the page is identified as black and white and is sent to a monochromatic printer. If desired, the PDF page images may be tagged as black and white or color as the case may be for each page.

BRIEF DESCRIPTION OF THE DRAWINGS

FIGURE 1 is a block flow diagram of an exemplary embodiment of the present disclosure;

FIGURE 2 is a block flow diagram similar to FIGURE 1 of another exemplary embodiment of the method of the present disclosure;

FIGURE 3 is a block flow diagram similar to FIGURE 1 of another exemplary embodiment of the method of the present disclosure; and,

FIGURE 4 is a diagram of the conversion process for obtaining color index values.

DETAILED DESCRIPTION

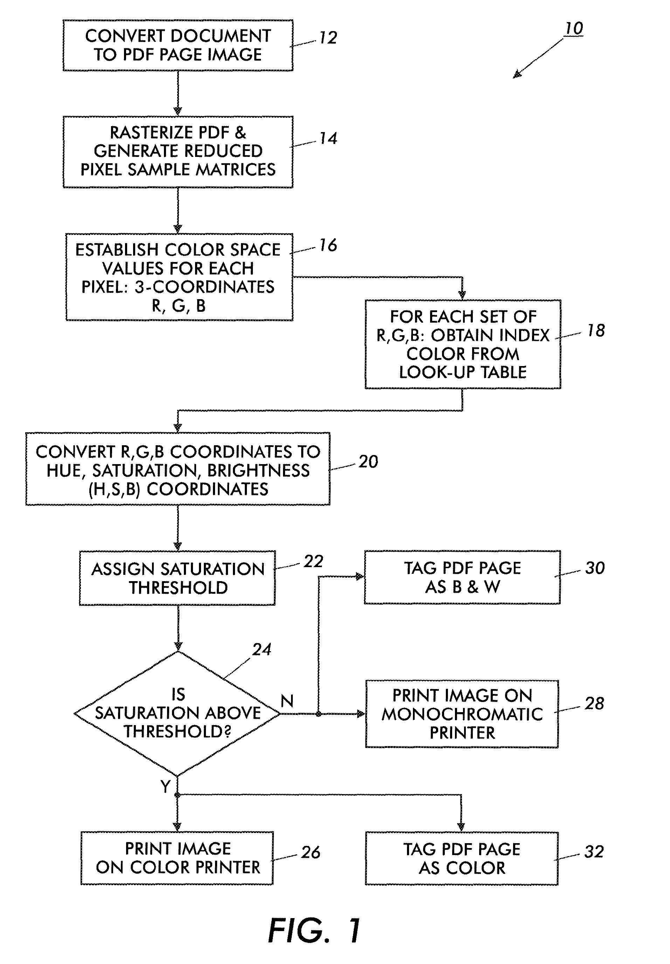

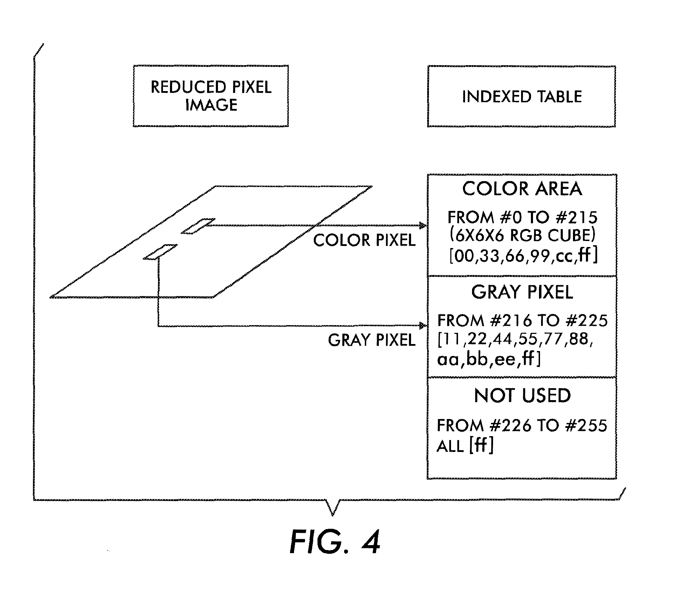

Referring to FIGURE 1, a first exemplary embodiment of the method of the present disclosure is indicated generally at 10 wherein the system at step 12, is operative to convert the pages of the document to PDF page image files and then proceeds to step 14 to rasterize the PDF files and generate reduced pixel sample matrices of each for example 106 x 106 pixel matrices or 77 x 99 pixels as 1/8 of an 8 1/2" x 11" page. The system then proceeds to step 16 and establishes color space values for each of the pixels in the red, green, blue (RGB) coordinate system. The system then proceeds to step 18 where a color index value is obtained from a lookup table for each set of RGB coordinates of step 16. The process is illustrated in FIGURE 4; and, the values are given in Table I.

**Table I**

| index No. | R | G | B | BW/ Color | index No. | R | G | B | BW/ Color | index No. | R | G | B | BW/ Color |
|---|---|---|---|---|---|---|---|---|---|---|---|---|---|---|
| 0 | 0 | 0 | 0 | BW | 12 | 0 | 66 | 0 | Color | 24 | 0 | CC | 0 | Color |
| 1 | 0 | 0 | 33 | Color | 13 | 0 | 66 | 33 | Color | 25 | 0 | CC | 33 | Color |
| 2 | 0 | 0 | 66 | Color | 14 | 0 | 66 | 66 | Color | 26 | 0 | CC | 66 | Color |
| 3 | 0 | 0 | 99 | Color | 15 | 0 | 66 | 99 | Color | 27 | 0 | CC | 99 | Color |
| 4 | 0 | 0 | CC | Color | 16 | 0 | 66 | CC | Color | 28 | 0 | CC | CC | Color |
| 5 | 0 | 0 | FF | Color | 17 | 0 | 66 | FF | Color | 29 | 0 | CC | FF | Color |
| 6 | 0 | 33 | 0 | Color | 18 | 0 | 99 | 0 | Color | 30 | 0 | FF | 0 | Color |
| 7 | 0 | 33 | 33 | Color | 19 | 0 | 99 | 33 | Color | 31 | 0 | FF | 33 | Color |
| 8 | 0 | 33 | 66 | Color | 20 | 0 | 99 | 66 | Color | 32 | 0 | FF | 66 | Color |
| 9 | 0 | 33 | 99 | Color | 21 | 0 | 99 | 99 | Color | 33 | 0 | FF | 99 | Color |
| 10 | 0 | 33 | CC | Color | 22 | 0 | 99 | CC | Color | 34 | 0 | FF | CC | Color |
| 11 | 0 | 33 | FF | Color | 23 | 0 | 99 | FF | Color | 35 | 0 | FF | FF | Color |
| 36 | 33 | 0 | 0 | Color | 83 | 66 | 33 | FF | Color | 130 | 99 | 99 | CC | Color |
| 37 | 33 | 0 | 33 | Color | 84 | 66 | 66 | 0 | Color | 131 | 99 | 99 | FF | Color |
| 38 | 33 | 0 | 66 | Color | 85 | 66 | 66 | 33 | Color | 132 | 99 | CC | 0 | Color |
| 39 | 33 | 0 | 99 | Color | 86 | 66 | 66 | 66 | BW | 133 | 99 | CC | 33 | Color |
| 40 | 33 | 0 | CC | Color | 87 | 66 | 66 | 99 | Color | 134 | 99 | CC | 66 | Color |
| 41 | 33 | 0 | FF | Color | 88 | 66 | 66 | CC | Color | 135 | 99 | CC | 99 | Color |
| 42 | 33 | 33 | 0 | Color | 89 | 66 | 66 | FF | Color | 136 | 99 | CC | CC | Color |
| 43 | 33 | 33 | 33 | BW | 90 | 66 | 99 | 0 | Color | 137 | 99 | CC | FF | Color |
| 44 | 33 | 33 | 66 | Color | 91 | 66 | 99 | 33 | Color | 138 | 99 | FF | 0 | Color |
| 45 | 33 | 33 | 99 | Color | 92 | 66 | 99 | 66 | Color | 139 | 99 | FF | 33 | Color |
| 46 | 33 | 33 | CC | Color | 93 | 66 | 99 | 99 | Color | 140 | 99 | FF | 66 | Color |
| 47 | 33 | 33 | FF | Color | 94 | 66 | 99 | CC | Color | 141 | 99 | FF | 99 | Color |
| 48 | 33 | 66 | 0 | Color | 95 | 66 | 99 | FF | Color | 142 | 99 | FF | CC | Color |
| 49 | 33 | 66 | 33 | Color | 96 | 66 | CC | 0 | Color | 143 | 99 | FF | FF | Color |
| 50 | 33 | 66 | 66 | Color | 97 | 66 | CC | 33 | Color | 144 | CC | 0 | 0 | Color |
| 51 | 33 | 66 | 99 | Color | 98 | 66 | CC | 66 | Color | 145 | CC | 0 | 33 | Color |
| 52 | 33 | 66 | CC | Color | 99 | 66 | CC | 99 | Color | 146 | CC | 0 | 66 | Color |
| 53 | 33 | 66 | FF | Color | 100 | 66 | CC | CC | Color | 147 | CC | 0 | 99 | Color |
| 54 | 33 | 99 | 0 | Color | 101 | 66 | CC | FF | Color | 148 | CC | 0 | CC | Color |
| 55 | 33 | 99 | 33 | Color | 102 | 66 | FF | 0 | Color | 149 | CC | 0 | FF | Color |
| 56 | 33 | 99 | 66 | Color | 103 | 66 | FF | 33 | Color | 150 | CC | 33 | 0 | Color |
| 57 | 33 | 99 | 99 | Color | 104 | 66 | FF | 66 | Color | 151 | CC | 33 | 33 | Color |
| 58 | 33 | 99 | CC | Color | 105 | 66 | FF | 99 | Color | 152 | CC | 33 | 66 | Color |
| 59 | 33 | 99 | FF | Color | 106 | 66 | FF | CC | Color | 153 | CC | 33 | 99 | Color |
| 60 | 33 | CC | 0 | Color | 107 | 66 | FF | FF | Color | 154 | CC | 33 | CC | Color |
| 61 | 33 | CC | 33 | Color | 108 | 99 | 0 | 0 | Color | 155 | CC | 33 | FF | Color |
| 62 | 33 | CC | 66 | Color | 109 | 99 | 0 | 33 | Color | 156 | CC | 66 | 0 | Color |

(continued)

| index No. | R | G | B | BW/Color | index No. | R | G | B | BW/Color | index No. | R | G | B | BW/Color |
|---|---|---|---|---|---|---|---|---|---|---|---|---|---|---|
| 63 | 33 | CC | 99 | Color | 110 | 99 | 0 | 66 | Color | 157 | CC | 66 | 33 | Color |
| 64 | 33 | CC | CC | Color | 111 | 99 | 0 | 99 | Color | 158 | CC | 66 | 66 | Color |
| 65 | 33 | CC | FF | Color | 112 | 99 | 0 | CC | Color | 159 | CC | 66 | 99 | Color |
| 66 | 33 | FF | 0 | Color | 113 | 99 | 0 | FF | Color | 160 | CC | 66 | CC | Color |
| 67 | 33 | FF | 33 | Color | 114 | 99 | 33 | 0 | Color | 161 | CC | 66 | FF | Color |
| 68 | 33 | FF | 66 | Color | 115 | 99 | 33 | 33 | Color | 162 | CC | 99 | 0 | Color |
| 69 | 33 | FF | 99 | Color | 116 | 99 | 33 | 66 | Color | 163 | CC | 99 | 33 | Color |
| 70 | 33 | FF | CC | Color | 117 | 99 | 33 | 99 | Color | 164 | CC | 99 | 66 | Color |
| 71 | 33 | FF | FF | Color | 118 | 99 | 33 | CC | Color | 165 | CC | 99 | 99 | Color |
| 72 | 66 | 0 | 0 | Color | 119 | 99 | 33 | FF | Color | 166 | CC | 99 | CC | Color |
| 73 | 66 | 0 | 33 | Color | 120 | 99 | 66 | 0 | Color | 167 | CC | 99 | FF | Color |
| 74 | 66 | 0 | 66 | Color | 121 | 99 | 66 | 33 | Color | 168 | CC | CC | 0 | Color |
| 75 | 66 | 0 | 99 | Color | 122 | 99 | 66 | 66 | Color | 169 | CC | CC | 33 | Color |
| 76 | 66 | 0 | CC | Color | 123 | 99 | 66 | 99 | Color | 170 | CC | CC | 66 | Color |
| 77 | 66 | 0 | FF | Color | 124 | 99 | 66 | CC | Color | 171 | CC | CC | 99 | Color |
| 78 | 66 | 33 | 0 | Color | 125 | 99 | 66 | FF | Color | 172 | CC | CC | CC | BW |
| 79 | 66 | 33 | 33 | Color | 126 | 99 | 99 | 0 | Color | 173 | CC | CC | FF | Color |
| 80 | 66 | 33 | 66 | Color | 127 | 99 | 99 | 33 | Color | 174 | CC | FF | 0 | Color |
| 81 | 66 | 33 | 99 | Color | 128 | 99 | 99 | 66 | Color | 175 | CC | FF | 33 | Color |
| 82 | 66 | 33 | CC | Color | 129 | 99 | 99 | 99 | BW | 176 | CC | FF | 66 | Color |
| 177 | CC | FF | 99 | Color | 204 | FF | CC | 0 | Color | 231 | FF | FF | FF | NA |
| 178 | CC | FF | CC | Color | 205 | FF | CC | 33 | Color | 232 | FF | FF | FF | NA |
| 179 | CC | FF | FF | Color | 206 | FF | CC | 66 | Color | 233 | FF | FF | FF | NA |
| 180 | FF | 0 | 0 | Color | 207 | FF | CC | 99 | Color | 234 | FF | FF | FF | NA |
| 181 | FF | 0 | 33 | Color | 208 | FF | CC | CC | Color | 235 | FF | FF | FF | NA |
| 182 | FF | 0 | 66 | Color | 209 | FF | CC | FF | Color | 236 | FF | FF | FF | NA |
| 183 | FF | 0 | 99 | Color | 210 | FF | FF | 0 | Color | 237 | FF | FF | FF | NA |
| 184 | FF | 0 | CC | Color | 211 | FF | FF | 33 | Color | 238 | FF | FF | FF | NA |
| 185 | FF | 0 | FF | Color | 212 | FF | FF | 66 | Color | 239 | FF | FF | FF | NA |
| 186 | FF | 33 | 0 | Color | 213 | FF | FF | 99 | Color | 240 | FF | FF | FF | NA |
| 187 | FF | 33 | 33 | Color | 214 | FF | FF | CC | Color | 241 | FF | FF | FF | NA |
| 188 | FF | 33 | 66 | Color | 215 | FF | FF | FF | BW | 242 | FF | FF | FF | NA |
| 189 | FF | 33 | 99 | Color | 216 | 11 | 11 | 11 | BW | 243 | FF | FF | FF | NA |
| 190 | FF | 33 | CC | Color | 217 | 22 | 22 | 22 | BW | 244 | FF | FF | FF | NA |
| 191 | FF | 33 | FF | Color | 218 | 44 | 44 | 44 | BW | 245 | FF | FF | FF | NA |
| 192 | FF | 66 | 0 | Color | 219 | 55 | 55 | 55 | BW | 246 | FF | FF | FF | NA |
| 193 | FF | 66 | 33 | Color | 220 | 77 | 77 | 77 | BW | 247 | FF | FF | FF | NA |
| 194 | FF | 66 | 66 | Color | 221 | 88 | 88 | 88 | BW | 248 | FF | FF | FF | NA |
| 195 | FF | 66 | 99 | Color | 222 | AA | AA | AA | BW | 249 | FF | FF | FF | NA |
| 196 | FF | 66 | CC | Color | 223 | BB | BB | BB | BW | 250 | FF | FF | FF | NA |
| 197 | FF | 66 | FF | Color | 224 | DD | DD | DD | BW | 251 | FF | FF | FF | NA |
| 198 | FF | 99 | 0 | Color | 225 | EE | EE | EE | BW | 252 | FF | FF | FF | NA |
| 199 | FF | 99 | 33 | Color | 226 | FF | FF | FF | NA | 253 | FF | FF | FF | NA |
| 200 | FF | 99 | 66 | Color | 227 | FF | FF | FF | NA | 254 | FF | FF | FF | NA |
| 201 | FF | 99 | 99 | Color | 228 | FF | FF | FF | NA | 255 | FF | FF | FF | NA |
| 202 | FF | 99 | CC | Color | 229 | FF | FF | FF | NA | | | | | |
| 203 | FF | 99 | FF | Color | 230 | FF | FF | FF | NA | | | | | |

At step 20 the system converts the RGB coordinates to the Hue, Saturation, Brightness (H, S, B) coordinate system. In the present practice, the conversion is by the following.

Let MAX equal the maximum of the R, G, B values, and MIN equal the minimum of those values, then:

$$H = \begin{cases} undefined, & \text{if } MAX = MIN \\ 60 \times \dfrac{G-B}{MAX-MIN} + 0, & \text{if } MAX = R \\ & \text{and } G \geq B \\ 60 \times \dfrac{G-B}{MAX-MIN} + 360, & \text{if } MAX = R \\ & \text{and } G < B \\ 60 \times \dfrac{B-R}{MAX-MIN} + 120, & \text{if } MAX = G \\ 60 \times \dfrac{R-G}{MAX-MIN} + 240, & \text{if } MAX = B \end{cases}$$

$$S = \begin{cases} 0, & \text{if } MAX = 0 \\ 1 - \dfrac{MIN}{MAX}, & \text{otherwise} \end{cases}$$

$$B = MAX$$

The system then proceeds to step 22 where a saturation threshold is assigned; and, the assignment may be either predetermined or selected by the user, The system then proceeds to step 24 and inquires as to whether the saturation level of each pixel is above the threshold established in step 22. If the determination in step 24 is affirmative, the system identifies the page as a color page and proceeds to send the page to a color printer for printing at step 26.

If however, the determination at step 24 is negative, the system proceeds to identify the page as black and white and sends the image to a monochromatic or black and white printer for printing at step 28. If desired, the image sent to the printer at step 28 may also have the PDF page tagged as black and white as indicated in step 30. Similarly, if desired, the image sent to the color printer at step 26 may also have the PDF page image tagged as color at step 32.

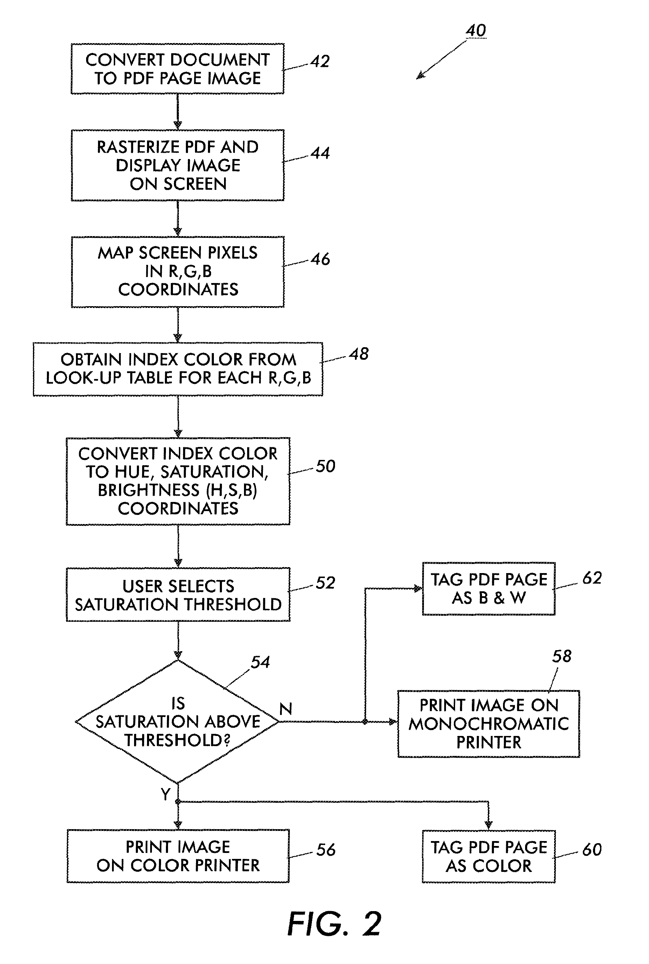

Referring to FIGURE 2, a second exemplary embodiment of the method of the present disclosure is indicated generally at 40 and at step 42 converts the pages of the document to PDF page image files and proceeds at step 44 to rasterize each PDF page image and display the image on a screen. The screen image then has the pixels of the screen image mapped into RGB coordinates at step 46. The system then proceeds to step 48 and obtains the index color for each coordinate set at step 46 from a lookup table such as table I. The index color at step 48 is then converted at step 50 to the Hue, Saturation, Brightness (H, S, B) coordinate system such as by the above described formula. The system then proceeds to step 52 wherein the user selects a saturation threshold to be employed.

The system then proceeds to step 54 and inquires as to whether the saturation level of each pixel is above the threshold selected in step 52; and, if such is the case the document is identified as a color page and the system proceeds to send the image to a color printer at step 56. However, if the determination at step 54 is negative the system identifies the page image as black and white and sends the page image to a monochromatic or black and white printer for printing at step 58. If desired, the color page image sent to the color printer at step 56 may also be tagged as color at step 60. If the image is identified as black and white, at step 54, the PDF page image may be tagged as black and white at step 62.

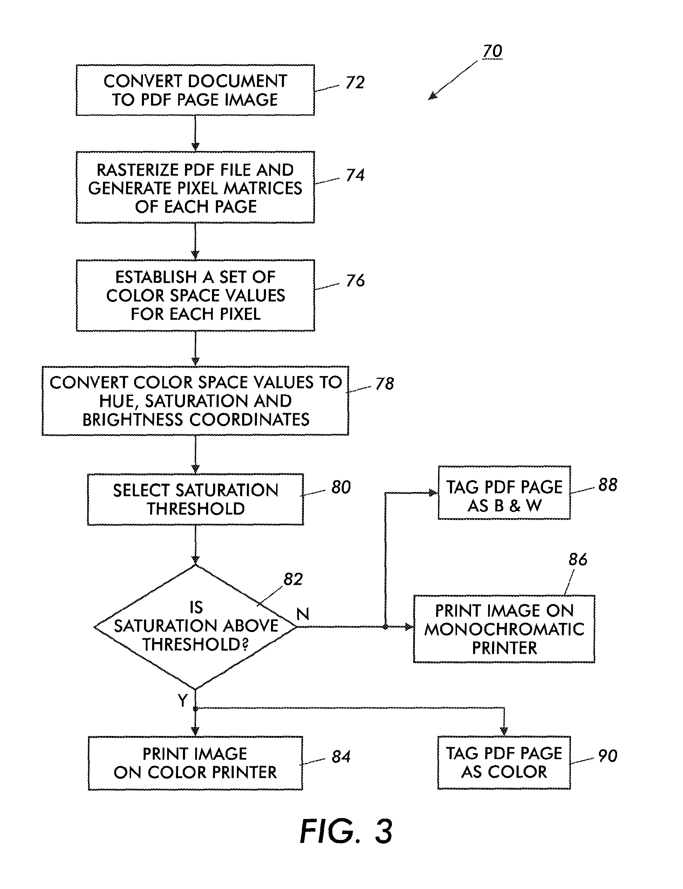

Referring to FIGURE 3, another exemplary embodiment of the disclosure is illustrated generally at 70, wherein at step 72 the system converts each of the document pages to a PDF page image and proceeds to step 74 to rasterize the PDF file and generate complete pixel matrices of each page. The system then proceeds to step 76 and establishes a set of color space values for each pixel. Because the method disclosed with respect to FIGURE 3 operates on all the pixels of the particular page, the embodiment of FIGURE 3 will operate somewhat more slowly than the embodiments of FIGURES 1 and 2 for any particular piece of equipment utilized.

The system then converts the color space values established in step 76 to the Hue, Saturation, Brightness coordinate system by the process described hereinabove and proceeds at step 78 and proceeds to step 80 wherein a saturation threshold is selected.

The system then proceeds to step 82 and makes the determination as to whether each pixel has a saturation level above the threshold selected at step 80. If the determination in step 82 is affirmative, the page is identified as color and the image sent to a color printer at step 84 for printing. However, if the determination at step 82 finds that none of the pixels have a saturation level above the selected threshold, the page is identified as black and white and sent to a monochromatic or black and white printer at step 86 and printed thereon. If desired, the image sent to the monochromatic printer at step 86 may have the PDF page image thereof tagged as black and white at step 88. Similarly, if the page is identified as color and sent to a color printer at step 84, the system may tag the PDF page image as color at step 90.

The present disclosure describes a method of automatically identifying the pages in a document or sheet stack of pages as to whether they have color images thereon or are in black and white and sends each page to an appropriate printer thereby realizing economies of printer usage and ink consumption.

**Claims**

1. A method of printing documents comprising:

   (a) converting a document to be printed into a PDF image file;
   (b) rasterizing the PDF file and generating sample pixel matrices comprising a fraction of the pixels of the image file to be printed;
   (c) establishing a set of color space values for each of the pixels in the matrices;
   (d) obtaining the Index Color from a look-up table for each set of color space values;
   (e) converting the Index Colors to Hue, Saturation and Brightness (H, S, B) coordinates; and,
   (f) determining whether the Saturation is above a predetermined threshold and if affirmative printing the page on a color printer; and, if negative, printing the image on a monochromatic printer.

2. The method defined in claim 1, wherein the step of printing on a color printer includes tagging the PDF image file for color.

3. The method defined in claim 1, wherein the step of printing on a black and white printer includes tagging the PDF image file as black and white.

4. A method of printing a document comprising:

   (a) converting a document to be printed to a PDF image file;
   (b) rasterizing the PDF and display image on a screen;
   (c) mapping the screen pixels in color space in coordinate sets;
   (d) obtaining an Index Color for each coordinate set;
   (e) converting the Index Colors to Hue, Saturation and Brightness (H, S, B) coordinates;
   (f) selecting a saturation threshold and determining if the Index Color Saturation is above the threshold; and,
   (g) printing the image on a monochromatic printer if the Saturation is determined to be below the threshold and printing the image on a color printer if the Saturation is determined to be above the threshold.

5. The method defined in claim 4, wherein the step of printing on a monochromatic printer includes tagging the PDF image file as black and white.

6. The method defined in claim 4, wherein the step of printing on a color printer includes tagging the PDF image file as color.

7. A method of printing documents comprising:

(a) converting a document to be printed into a PDF image file;
(b) rasterizing the PDF file and generating pixel matrices of each page of the image file to be printed;
(c) establishing a set of color space values for each of the pixels;
(d) converting the color space values to Hue, Saturation and Brightness (H, S, B) coordinates;
(e) selecting a Saturation threshold; and,
(f) determining whether the Saturation for each pixel is above the selected threshold and if affirmative printing the page on a monochromatic printer.

8. The method defined in claim 7, wherein the step of printing on a monochromatic printer includes tagging the PDF page image file as black and white.

9. The method defined in claim 7, wherein the step of printing on a color printer includes tagging the PDF page image file as color.

CONVERT DOCUMENT TO PDF PAGE IMAGE — 12

10

RASTERIZE PDF & GENERATE REDUCED PIXEL SAMPLE MATRICES — 14

ESTABLISH COLOR SPACE VALUES FOR EACH PIXEL: 3-COORDINATES R, G, B — 16

FOR EACH SET OF R,G,B: OBTAIN INDEX COLOR FROM LOOK-UP TABLE — 18

CONVERT R,G,B COORDINATES TO HUE, SATURATION, BRIGHTNESS (H,S,B) COORDINATES — 20

ASSIGN SATURATION THRESHOLD — 22

TAG PDF PAGE AS B & W — 30

IS SATURATION ABOVE THRESHOLD? — 24

N

PRINT IMAGE ON MONOCHROMATIC PRINTER — 28

Y

PRINT IMAGE ON COLOR PRINTER — 26

TAG PDF PAGE AS COLOR — 32

**FIG. 1**

**FIG. 2**

Flowchart 40:

- CONVERT DOCUMENT TO PDF PAGE IMAGE — 42
- RASTERIZE PDF AND DISPLAY IMAGE ON SCREEN — 44
- MAP SCREEN PIXELS IN R,G,B COORDINATES — 46
- OBTAIN INDEX COLOR FROM LOOK-UP TABLE FOR EACH R,G,B — 48
- CONVERT INDEX COLOR TO HUE, SATURATION, BRIGHTNESS (H,S,B) COORDINATES — 50
- USER SELECTS SATURATION THRESHOLD — 52
- IS SATURATION ABOVE THRESHOLD? — 54
  - N → TAG PDF PAGE AS B & W — 62
  - N → PRINT IMAGE ON MONOCHROMATIC PRINTER — 58
  - Y → PRINT IMAGE ON COLOR PRINTER — 56
  - Y → TAG PDF PAGE AS COLOR — 60

CONVERT DOCUMENT
TO PDF PAGE IMAGE — 72

_70_

RASTERIZE PDF FILE AND
GENERATE PIXEL MATRICES
OF EACH PAGE — 74

ESTABLISH A SET OF
COLOR SPACE VALUES
FOR EACH PIXEL — 76

CONVERT COLOR SPACE VALUES TO
HUE, SATURATION AND
BRIGHTNESS COORDINATES — 78

SELECT SATURATION
THRESHOLD — 80

TAG PDF PAGE
AS B & W — 88

_82_

IS
SATURATION ABOVE
THRESHOLD?

N

_86_

PRINT IMAGE ON
MONOCHROMATIC
PRINTER

Y

PRINT IMAGE
ON COLOR PRINTER — 84

TAG PDF PAGE
AS COLOR — 90

FIG. 3

REDUCED PIXEL
IMAGE

INDEXED TABLE

COLOR PIXEL

GRAY PIXEL

COLOR AREA

FROM #0 TO #215
(6X6X6 RGB CUBE)
[00,33,66,99,cc,ff]

GRAY PIXEL

FROM #216 TO #225
[11,22,44,55,77,88,
aa,bb,ee,ff]

NOT USED

FROM #226 TO #255
ALL [ff]

## FIG. 4

**European Patent Office**

## EUROPEAN SEARCH REPORT

Application Number

EP 08 15 0455

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2006 159546 A (CANON KK) 22 June 2006 (2006-06-22) * abstract * * paragraphs [0007], [0010] * ----- | 1-9 | INV. H04N1/32 |
| A | EP 0 363 146 A (CANON KK [JP]) 11 April 1990 (1990-04-11) * abstract * ----- | 1-9 | |

TECHNICAL FIELDS SEARCHED (IPC)

H04N

The present search report has been drawn up for all claims

| Place of search | Date of completion of the search | Examiner |
|---|---|---|
| The Hague | 6 March 2008 | Azaustre Maleno, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................

& : member of the same patent family, corresponding document

**EP 1 950 948 A1**

## ANNEX TO THE EUROPEAN SEARCH REPORT
## ON EUROPEAN PATENT APPLICATION NO.

EP 08 15 0455

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2008

| Patent document cited in search report | | Publication date | Patent family member(s) | | Publication date |
|---|---|---|---|---|---|
| JP 2006159546 | A | 22-06-2006 | NONE | | |
| EP 0363146 | A | 11-04-1990 | DE | 68925174 D1 | 01-02-1996 |
| | | | DE | 68925174 T2 | 13-06-1996 |
| | | | ES | 2081850 T3 | 16-03-1996 |

For more details about this annex : see Official Journal of the European Patent Office, No. 12/82

13